# EUROPEAN PATENT APPLICATION

(11) **EP 4 841 070 A1**
(43) Date of publication of application: **18.11.2026**
(21) Application number: 26170342.5
(22) Date of filing: 01.04.2026
(51) Int. Cl.: F01D 11/08, B22F 5/00, B22F 10/25, B22F 10/28, B33Y 10/00, B33Y 80/00, F01D 5/00, F01D 9/04, F01D 11/12

(54) **TURBINE ENGINE ROTOR SHROUD**

(30) Priority: 02.04.2025 US 202519098672
(71) Applicant: RTX Corporation, Farmington, CT 06032 (US)
(72) Inventor: SIW, Sin Chien, Simsbury (US); GUSTAFSON, Eric F., Glastonbury (US); ASARE, Ted A., Glastonbury (US)
(74) Representative: Dehns

(57) **Abstract**

A method of manufacture is provided during which a shroud segment (122) for a rotor shroud (92) is received. The rotor shroud (92) is configured to form an air seal radially outboard of and circumscribing a bladed rotor within a turbine engine (24). The shroud segment (122) includes a metal shroud body (124) with a damaged portion (152) at a radial inner periphery of the metal shroud body (124). The damaged portion (152) is removed from the metal shroud body (124) to form a shroud preform (150). Buildup metal is deposited onto the shroud preform (150) using an additive manufacturing process to provide the shroud segment (122) with a remanufactured metal shroud body (124).

## Description

### TECHNICAL FIELD

This disclosure relates generally to a turbine engine and, more particularly, to a rotor shroud and methods for manufacture thereof.

### BACKGROUND

Various types and configurations of rotor shrouds (e.g., blade outer air seals (BOASs)) are known in the art. Various methods are also known in the art for manufacturing rotor shrouds, including remanufacturing the rotor shrouds. While these known rotor shrouds and methods of manufacture have various benefits, there is still room in the art for improvement.

### SUMMARY

According to an aspect, a method of manufacture is provided during which a shroud segment for a rotor shroud is received. The rotor shroud is configured to form an air seal radially outboard of and circumscribing a bladed rotor within a turbine engine. The shroud segment includes a metal shroud body with a damaged portion at a radial inner periphery of the metal shroud body. The damaged portion is removed from the metal shroud body to form a shroud preform. Buildup metal is deposited onto the shroud preform using an additive manufacturing process to provide the shroud segment with a remanufactured metal shroud body.

According to another aspect, another method of manufacture is provided during which a shroud preform is provided formed from cast metal. Buildup metal is built up onto the shroud preform using an additive manufacturing process to form a shroud segment for a rotor shroud. The rotor shroud is configured to form an air seal radially outboard of and circumscribing a bladed rotor within a turbine engine. The buildup metal is located at a radial inner periphery of the shroud segment. The buildup metal and the cast metal may be or otherwise include a common metal.

According to still another aspect, an apparatus is provided for a turbine engine. This apparatus includes a rotor shroud configured to form an air seal radially outboard of and circumscribing a bladed rotor within the turbine engine. The rotor shroud includes a shroud segment. The shroud segment extends axially along an axis between opposing axial ends of the shroud segment. The shroud segment extends circumferentially about the axis between opposing circumferential ends of the shroud segment. The shroud segment extends radially between an inner side of the shroud segment and an outer side of the shroud segment. The shroud segment includes a metal shroud body. An outer portion of the metal shroud body is disposed at the outer side of the shroud segment. The outer portion of the metal shroud body may have a first density. An inner portion of the metal shroud body is disposed at the inner side of the shroud segment. The inner portion of the metal shroud body may have a second density that is less than the first density. The outer portion of the metal shroud body and the inner portion of the metal shroud body may be formed from or otherwise include a common metal.

The providing of the shroud preform may include removing a damaged portion from a premanufactured shroud segment.

The shroud preform may have a uniform density. At least a portion of a feature of the shroud segment may be formed by the buildup metal has a non-uniform density.

The additive manufacturing process may be a directed laser metal deposition process.

The buildup metal may be deposited onto the shroud preform layer-by-layer using the additive manufacturing process.

The buildup metal may be deposited onto the shroud preform using the additive manufacturing process to replace a feature of the shroud segment that was at least partially defined by the damaged portion removed from the metal shroud body.

The feature of the shroud segment may be built up onto the shroud preform using the additive manufacturing process according to an original design specification for the shroud segment.

The feature of the shroud segment may be built up onto the shroud preform using the additive manufacturing process according to a revised design specification that is different than an original design specification for the shroud segment.

The damaged portion may be removed from the metal shroud body by machining the metal shroud body.

The metal shroud body may be formed from body metal. The body metal and the buildup metal may be or otherwise include a common metal.

The metal shroud body may be formed from body metal. The body metal and the buildup metal may be or otherwise include different metals.

The damaged portion may have a first density. A feature of the remanufactured metal shroud body may be formed by the buildup metal has a second density that is equal to the first density.

The damaged portion may have a first density. At least a portion of a feature of the remanufactured metal shroud body may be formed by the buildup metal has a second density that is different than the first density.

The damaged portion may have a uniform density. At least a portion of a feature of the remanufactured metal shroud body may be formed by the buildup metal has a non-uniform density.

The rotor shroud may extend axially along and circumferentially around an axis. At least a portion of a feature of the remanufactured metal shroud body may be formed by the buildup metal has a density that axially varies.

The rotor shroud may extend axially along and circumferentially around an axis. At least a portion of a feature of the remanufactured metal shroud body may be formed by the buildup metal has a density that radially varies.

A first region of the buildup metal deposited on the shroud preform may have a first density. A second region of the buildup metal deposited on the shroud preform may have a second density. A third region of the buildup metal deposited on the shroud preform may have a third density that is different than the first density and the second density. The third region may be between and adjacent the first region and the second region.

The buildup metal may be built up onto the shroud preform using the additive manufacturing process such that one or more cooling apertures project out of the shroud preform and extend through the buildup metal.

The method may also include removing the shroud segment with the damaged portion from a turbine section of the turbine engine.

The method may also include installing the shroud segment with the remanufactured metal shroud body into a turbine section of the turbine engine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a partial schematic illustration of an engine section for the aircraft propulsion system.
FIG. 3 is a partial sectional illustration of a portion of the engine section at a rotor shroud.
FIG. 4 is a partial cross-sectional illustration of a portion of the rotor shroud.
FIG. 5 is an illustration of an inner side of a shroud segment of the rotor shroud.
FIG. 6 is a flow diagram of a method for manufacturing a shroud segment.
FIG. 7 is a partial sectional illustration of a shroud preform.
FIG. 8 is a partial sectional illustration of a previously manufactured shroud segment with a damaged portion.
FIG. 9 is a partial sectional illustration of a remanufactured shroud segment.
FIGS. 10A-C are partial schematic illustrations of a shroud body with various material density arrangements.

### DETAILED DESCRIPTION

The present disclosure includes a turbine engine comprising a rotor shroud (e.g., a blade outer air seal (BOAS)) for a bladed engine rotor within the turbine engine. The present disclosure also includes methods for manufacturing at least the rotor shroud. The term "manufacturing" may describe a method for an original manufacture of the rotor shroud; e.g., forming a brand new rotor shroud. The term "manufacturing" may also or alternatively describe a method for remanufacture or otherwise repairing of the rotor shroud; e.g., restoring one or more features of a previously manufactured rotor shroud to brand new condition, similar to brand new condition, better than brand new condition, etc.

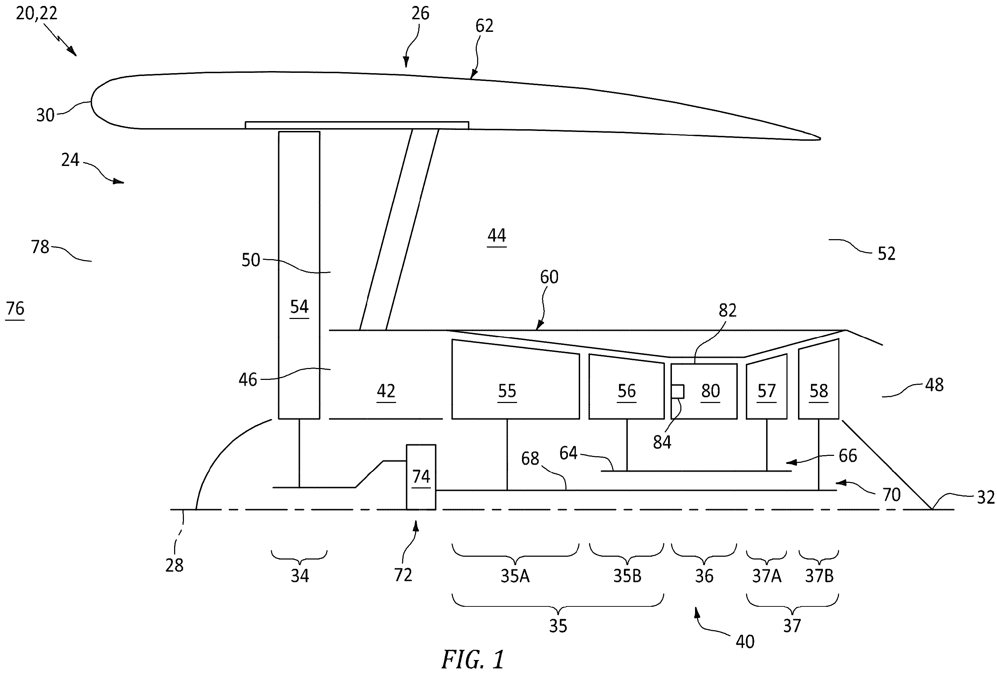

FIG. 1 illustrates a powerplant 20 for an aircraft. The aircraft may be an airplane, a rotorcraft (e.g., a helicopter), a drone (e.g., an unmanned aerial vehicle (UAV)), or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open rotor propulsion system. Moreover, the aircraft powerplant 20 is not limited to propulsion system applications nor aircraft applications. The aircraft powerplant 20, for example, may also (or alternatively) be configured as an electrical power system for the aircraft; e.g., an auxiliary power unit (APU). In another example, the powerplant 20 may be configured as an electrical power system for a ground-based (e.g., industrial) or other installation.

The aircraft propulsion system 22 of FIG. 1 includes a gas turbine engine 24 (e.g., a turbofan engine) housed within a stationary housing structure 26. The aircraft propulsion system 22 extends axially along an axis 28 between an axial upstream, forward end 30 of the aircraft propulsion system 22 and an axial downstream, aft end 32 of the aircraft propulsion system 22. Briefly, the propulsion system axis 28 may be a centerline axis of the aircraft propulsion system 22, the turbine engine 24 and/or one or more of its members. The propulsion system axis 28 may also or alternatively be a rotational axis for one or more members of the turbine engine 24.

The aircraft propulsion system 22 and its turbine engine 24 of FIG. 1 include a propulsor section 34 (e.g., a fan section), a compressor section 35, a combustor section 36 and a turbine section 37. The compressor section 35 of FIG. 1 includes a low pressure compressor (LPC) section 35A and a high pressure compressor (HPC) section 35B. The turbine section 37 of FIG. 1 includes a high pressure turbine (HPT) section 37A and a low pressure turbine (LPT) section 37B. At least (or only) the LPC section 35A, the HPC section 35B, the combustor section 36, the HPT section 37A and the LPT section 37B collectively form a core 40 of the turbine engine 24. The aircraft propulsion system 22 and its turbine engine 24 of FIG. 1 also include a core flowpath 42 (e.g., an annular core flowpath) and a bypass flowpath 44 (e.g., an annular bypass flowpath). The core flowpath 42 extends sequentially through the LPC section 35A, the HPC section 35B, the combustor section 36, the HPT section 37A and the LPT section 37B from an airflow inlet 46 into the core flowpath 42 to a combustion products exhaust 48 out from the core flowpath 42. The bypass flowpath 44 extends through a bypass duct from an airflow inlet 50 into the bypass flowpath 44 to an airflow exhaust 52 from the bypass flowpath 44. The bypass flowpath 44 and its bypass duct are configured to bypass (e.g., are disposed radially outboard of and extend along) the engine core 40.

The propulsor section 34, the LPC section 35A, the HPC section 35B, the combustor section 36, the HPT section 37A and the LPT section 37B may be arranged sequentially along the propulsion system axis 28. The propulsor section 34 includes a bladed propulsor rotor 54; e.g., a fan rotor. The LPC section 35A includes a bladed low pressure compressor (LPC) rotor 55. The HPC section 35B includes a bladed high pressure compressor (HPC) rotor 56. The HPT section 37A includes a bladed high pressure turbine (HPT) rotor 57. The LPT section 37B includes a bladed low pressure turbine (LPT) rotor 58. These engine rotors 54-58 are housed within the housing structure 26. The housing structure 26 of FIG. 1, for example, includes an inner housing structure 60 (e.g., a core case structure) and an outer housing structure 62 (e.g., a propulsor case structure). The inner housing structure 60 may house one or more of the engine sections 35A-37B and their engine rotors 55-58. The outer housing structure 62 may house at least the propulsor section 34 and its propulsor rotor 54.

Each of the engine rotors 54-58 includes a rotor base (e.g., a disk or a hub) and a plurality of rotor blades. The rotor blades may be arranged into one or more stages axially along the respective engine rotor 54-58. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade. Note, although not shown for ease of illustration, each rotor blade stage of a respective engine rotor 55-58 may be disposed next to and upstream or downstream of a respective neighboring stage of stator vanes for that respective engine section 35A, 35B, 37A, 37B along the core flowpath 42. At least some of the rotor blade stages of a respective engine rotor 55-58 may also be disposed between a neighboring pair of upstream and downstream stages of stator vanes along the core flowpath 42.

The HPC rotor 56 is coupled to and rotatable with the HPT rotor 57. The HPC rotor 56 of FIG. 1, for example, is connected to the HPT rotor 57 through a high speed shaft 64. At least (or only) the HPC rotor 56, the HPT rotor 57 and the high speed shaft 64 collectively form a high speed rotating structure 66; e.g., a high speed spool of the turbine engine 24 and its engine core 40. The high speed rotating structure 66 of FIG. 1 and its members 56, 57 and 64 are rotatable about the propulsion system axis 28.

The LPC rotor 55 is coupled to and rotatable with the LPT rotor 58. The LPC rotor 55 of FIG. 1, for example, is connected to the LPT rotor 58 through a low speed shaft 68. At least (or only) the LPC rotor 55, the LPT rotor 58 and the low speed shaft 68 collectively form a low speed rotating structure 70; e.g., a low speed spool of the turbine engine 24 and its engine core 40. The low speed rotating structure 70 of FIG. 1 and its members 55, 58 and 68 are rotatable about the propulsion system axis 28.

The low speed rotating structure 70 is coupled to the propulsor rotor 54 through a drivetrain 72. This drivetrain 72 may be configured as a geared drivetrain, where a geartrain 74 (e.g., a transmission, a speed change device, an epicyclic geartrain, etc.) is disposed between and operatively couples the propulsor rotor 54 to the low speed rotating structure 70 and its LPT rotor 58. With this arrangement, the propulsor rotor 54 may rotate at a different (e.g., slower) rotational speed than the low speed rotating structure 70 and its LPT rotor 58. Here, the propulsor rotor 54 and the low speed rotating structure 70 may rotate in a common (the same) direction about the propulsion system axis 28 or in opposite directions about the propulsion system axis 28 depending, for example, upon the specific configuration of the geartrain 74. Alternatively, the drivetrain 72 may be configured as a direct-drive drivetrain, where the geartrain 74 is omitted. With such an arrangement, the propulsor rotor 54 rotates at a common (the same) rotational speed as the low speed rotating structure 70 and its LPT rotor 58.

During operation of the aircraft propulsion system 22 of FIG. 1, ambient air from an environment 76 external to the aircraft and its aircraft propulsion system 22 enters the aircraft propulsion system 22 and its turbine engine 24 through an airflow inlet 78. This air is propelled by the rotating propulsor rotor 54 in a downstream, aft direction towards the propulsion system aft end 32.

An outer stream of the air propelled by the rotating propulsor rotor 54 is directed into the bypass flowpath 44 through its bypass inlet 50. The air entering the bypass flowpath 44 may be referred to as "bypass air". This bypass air flows through the bypass flowpath 44 and is directed out of the aircraft propulsion system 22 through the bypass exhaust 52 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 54 is directed into the core flowpath 42 through its core inlet 46. The air entering the core flowpath 42 may be referred to as "core air". This core air is compressed by the LPC rotor 55 and the HPC rotor 56 and is directed into a combustion chamber 80 (e.g., annular combustion chamber) of a combustor 82 (e.g., annular combustor) in the combustor section 36. Fuel is injected into the combustion chamber 80 by one or more fuel injectors 84 and mixed with the compressed core air to provide a fuel-air mixture. This fuel-air mixture is ignited and combustion products thereof flow through and sequentially drive rotation of the HPT rotor 57 and the LPT rotor 58. The rotation of the HPT rotor 57 and the LPT rotor 58 respectively drive rotation of the HPC rotor 56 and the LPC rotor 55 and, thus, compression of the air received from the core inlet 46. The rotation of the LPT rotor 58 also drives rotation of the propulsor rotor 54 through the drivetrain 72.

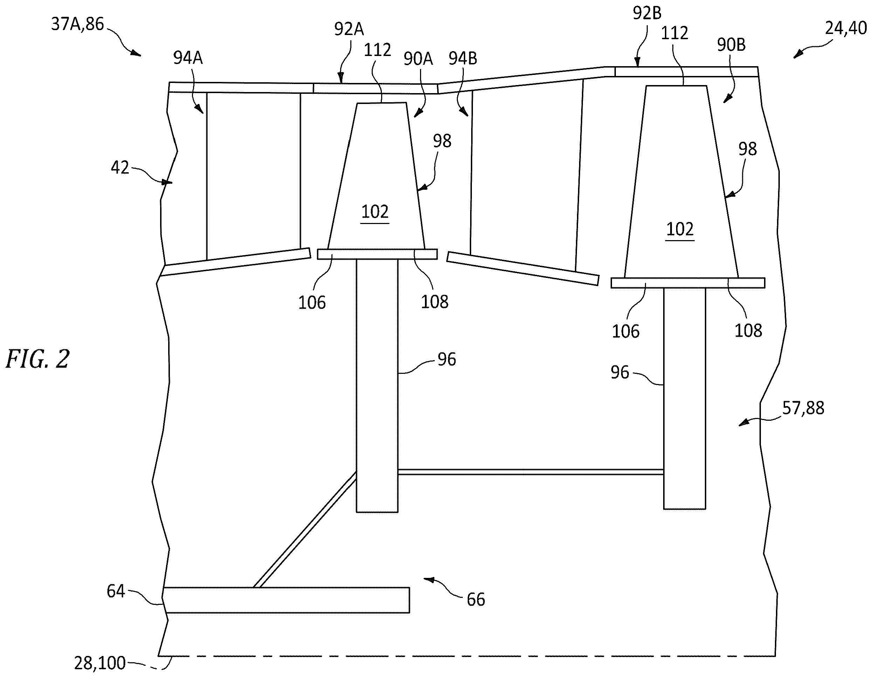

FIG. 2 illustrates a section 86 of the turbine engine 24. For ease of description, this engine section 86 is described below as the HPT section 37A in the turbine engine 24. However, it is contemplated the engine section 86 may alternatively be the LPT section 37B in the turbine engine 24 (see FIG. 1) or another section of the turbine engine 24 with a rotor shroud which would benefit from the features and/or methods described below.

The engine section 86 of FIG. 2 includes an engine rotor 88 (e.g., the HPT rotor 57) configured with a plurality of rotor stages 90A and 90B (generally referred to as "90"). The engine section 86 of FIG. 2 includes a respective outer rotor shroud 92A, 92B (generally referred to as "92") radially outboard of and circumscribing each rotor stage 90A, 90B. The engine section 86 of FIG. 2 also includes a plurality of stator vane structures 94A and 94B (generally referred to as "94") interspersed with the rotor stages 90 and the associated rotor shrouds 92. The first rotor stage 90A and its associated first rotor shroud 92A of FIG. 2, for example, are located next to and between the first stator vane structure 94A and the second stator vane structure 94B along the core flowpath 42. The second rotor stage 90B and its associated second rotor shroud 92B of FIG. 2 are located next to and downstream of the second stator vane structure 94B along the core flowpath 42. Here, the engine section 86 is shown as a two-stage section of the turbine engine 24; e.g., a two-stage HPT section. It is contemplated, however, the engine section 86 and its engine rotor 88 may alternatively be configured with a single stage or more than two stages. 106

Each rotor stage 90 includes a rotor base 96 (e.g., a disk or a hub) and a plurality of rotor blades 98 (e.g., turbine blades). The rotor blades 98 are arranged and may be equispaced circumferentially around the rotor base 96 and a rotational axis 100 of the engine rotor 88 (e.g., the propulsion system axis 28) in an array; e.g., an annular array. Each of the rotor blades 98 is connected to the rotor base 96 at or near a radial outer periphery of the rotor base 96. Each rotor blade 98, for example, may include an attachment (e.g., a root such as a dovetail root or a firtree root) inserted into and mated with a respective receptacle (e.g., slot such as a dovetail slot or a firtree slot) in the rotor base 96 to mechanically attach the respective rotor blade 98 to the rotor base 96. In another example, each rotor blade 98 may be welded or otherwise bonded to the rotor base 96. In still another example, each rotor blade 98 may be formed as an integral part of the rotor base 96. Each rotor blade 98 may be configured as or otherwise includes a blade airfoil 102; e.g., a turbine blade airfoil.

Each rotor blade 98 and its blade airfoil 102 are disposed radially outboard of and are connected to a platform 106 of the respective rotor stage 90 at a base 108 of the blade airfoil 102. The platform 106 of FIG. 2 is configured to form a radial inner peripheral boundary of a section of the core flowpath 42 that extends across the respective rotor stage 90. A respective circumferential section of the platform 106 may be configured as part of the respective rotor blade 98 where, for example, that rotor blade 98 is mechanically attached to the rotor base 96. Alternatively, the platform 106 may be configured as part of the rotor base 96 where, for example, the rotor blades 98 are bonded to or formed integral with the rotor base 96. The present disclosure, however, is not limited to the foregoing exemplary platform arrangements. Each rotor blade 98 and its blade airfoil 102 projects spanwise along a span line of the respective rotor blade 98 and its blade airfoil 102 (e.g., generally radially respective to the rotor axis 100) from the platform 106 to a tip 112 of the respective rotor blade 98 and its blade airfoil 102.

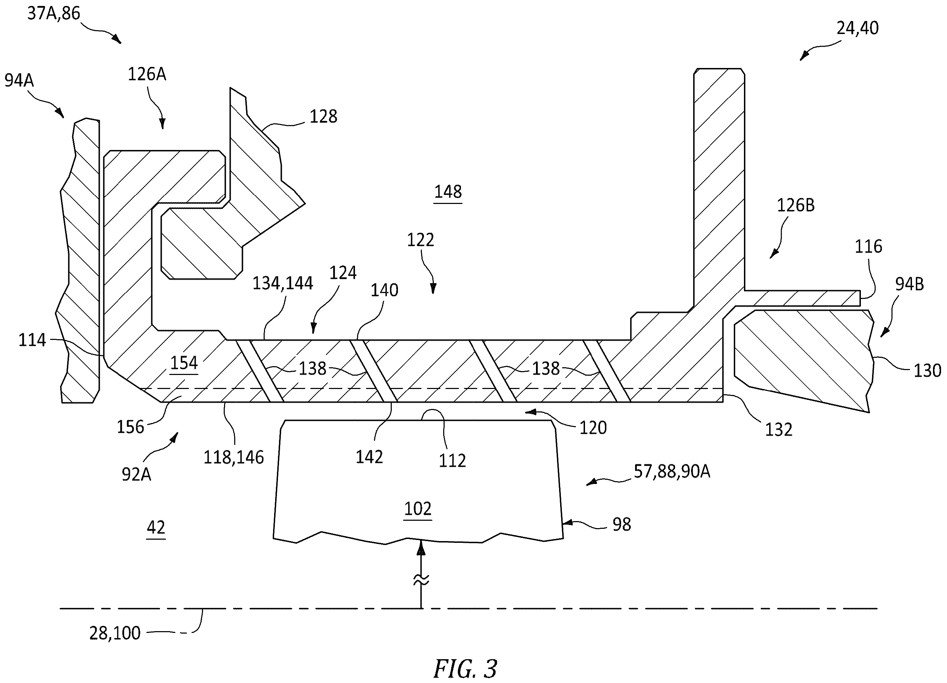

Referring to FIG. 3, each rotor shroud 92 may be configured as a blade outer air seal (BOAS) for a respective stage 90 of the engine rotor 88. The rotor shroud 92 of FIG. 3, for example, is disposed radially outboard of and next to, but spaced (e.g., slightly) radially outward from, the array of the rotor blades 98 and their blade tips 112. This rotor shroud 92 extends axially along (e.g., axially overlaps) the respective stage 90 of the engine rotor 88 and longitudinally along the core flowpath 42 between an axial upstream end 114 of the rotor shroud 92 and an axial downstream end 116 of the rotor shroud 92. The rotor shroud 92 extends circumferentially about (e.g., completely around) the rotor axis 100. The rotor shroud 92 may thereby circumscribe the respective stage 90 of the engine rotor 88 as well as the core flowpath 42. With this arrangement, a radial inner side 118 of the rotor shroud 92 of FIG. 3 at a radial inner periphery of the rotor shroud 92 forms a radial outer peripheral boundary of the section of the core flowpath 42 that extends across the respective rotor stage 90. A clearance gap 120 (e.g., an empty radial gap) between the rotor shroud 92 of FIG. 3 and each blade tip 112 may be sized to (a) minimize gas leakage (e.g., combustion products leakage) over and across the respective blade tip 112 while also (b) minimizing potential for engagement (e.g., contact) between the respective blade tip 112 and the rotor shroud 92.

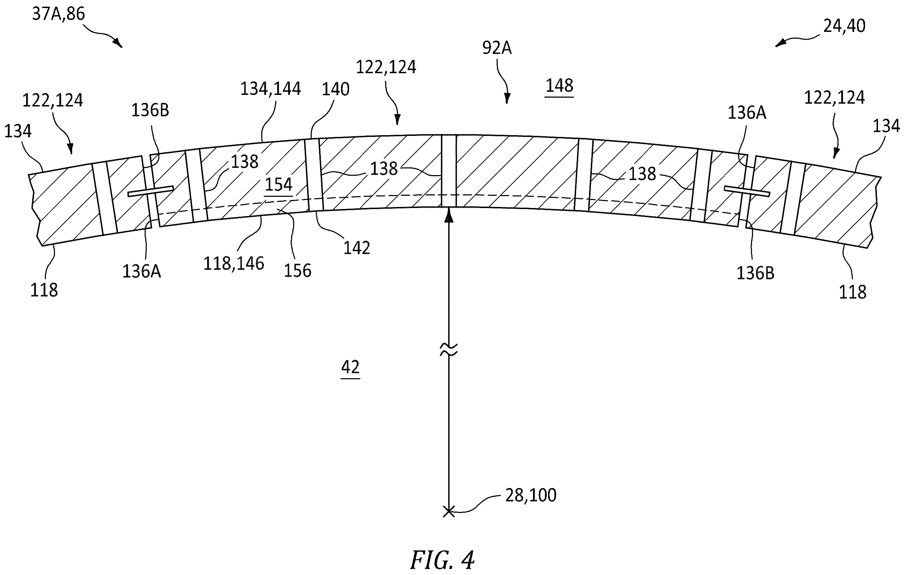

Referring to FIG. 4, each rotor shroud 92 may be divided into and includes a plurality of circumferential (e.g., arcuate) shroud segments 122. These shroud segments 122 are arranged end-to-end circumferentially about the rotor axis 100 in an array; e.g., an annular array. The shroud segments 122 of FIG. 4 thereby collectively form the respective rotor shroud 92. Referring to FIG. 3, each shroud segment 122 includes a shroud body 124. The shroud segment 122 of FIG. 3 also includes one or more attachments 126A and 126B (generally referred to as "126") for mounting the respective shroud segment 122 and its shroud body 124 to one or more other stationary components of the turbine engine 24; e.g., an outer support structure 128, an outer platform 130 of an adjacent stator vane structure 94, etc. Each attachment 126 may be configured as or otherwise include a hook, a flange and/or a rim. The present disclosure, however, is not limited to such an exemplary shroud segment mounting arrangements.

The shroud body 124 of FIG. 3 extends axially along the rotor axis 100 from or near the shroud upstream end 114 to an axial downstream end 132 of the shroud body 124. This body downstream end 132 is recessed axially upstream from the shroud downstream end 116. However, in other embodiments, it is contemplated the shroud downstream end 116 may alternatively also be the body downstream end 132. The shroud body 124 of FIG. 3 extends radially from the shroud inner side 118 to a radial outer side 134 of the shroud body 124. Briefly, the attachments 126 may be connected to (e.g., formed integral with or otherwise attached to) the shroud body 124 at (e.g., on, adjacent or proximate) the body outer side 134. Referring to FIG. 4, the shroud body 124 extends circumferentially about the rotor axis 100 between opposing circumferential ends 136A and 136B (generally referred to as "136") of the respective shroud segment 122 and its shroud body 124.

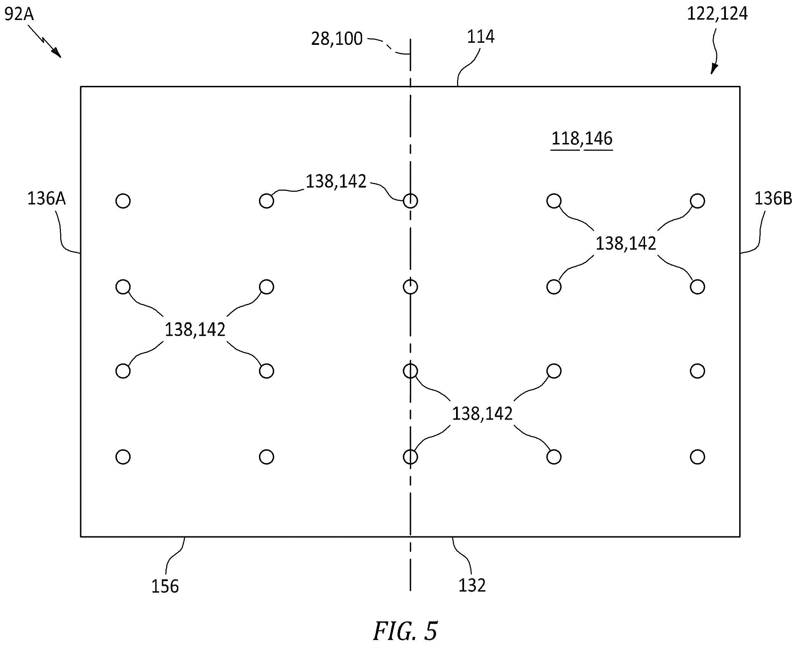

Referring to FIG. 5, each shroud segment 122 and its shroud body 124 are configured with one or more cooling apertures 138; e.g., cooling holes or passages. These cooling apertures 138 may be arranged into one or more circumferentially and/or axially extending arrays. Referring to FIG. 3, each cooling aperture 138 may extend radially through the shroud body 124 from the body outer side 134 to the shroud inner side 118. More particularly, each cooling aperture 138 of FIG. 3 includes an aperture inlet 140 and an aperture outlet 142. Each aperture inlet 140 of FIG. 3 is configured as an inlet orifice into the respective cooling aperture 138. This aperture inlet 140 may be formed in and may pierce a radial outer surface 144 of the shroud body 124 at the body outer side 134. Similarly, each aperture outlet 142 of FIG. 3 is configured as an outlet orifice from the respective cooling aperture 138. This aperture outlet 142 may be formed in and may pierce a radial inner surface 146 of the shroud body 124 at the shroud inner side 118. This body inner surface 146 of FIG. 3 forms the outer peripheral boundary of the core flowpath 42 axially and/or circumferentially along the respective shroud segment 122 and its shroud body 124. With this arrangement, the cooling apertures 138 may direct cooling air from a plenum 148 radially outboard of the respective shroud segment 122 and its shroud body 124 radially across the shroud body 124. This may facilitate convective cooling of the shroud body 124. The cooling apertures 138 may also be configured to exhaust the cooling air into the core flowpath 42 so as to film cool, effusion cool and/or otherwise air cool the body inner surface 146 at the shroud inner side 118. The present disclosure, however, is not limited to such an exemplary cooling aperture arrangement.

During certain operating conditions, one, some or all of the rotor blades 98 and their blade airfoils 102 may each (e.g., momentarily) radially contact and rub against the respective rotor shroud 92 and one or more of its members 122 and 124. This rubbing may remove (e.g., grind away, scrap away, chip away), deform (e.g., smear) and/or crack material of the respective shroud segment 122 and its shroud body 124. Such rubbing may lead to an increased clearance gap size between the respective blade tip 112 and the respective shroud segment 122 and its shroud body 124. Increasing the clearance gap size may in turn increase the leakage of gas (e.g., the combustion products) over and across the respective blade tip 112. The rubbing may also or alternatively lead to partial or complete plugging up of one or more of the cooling apertures 138. This cooling aperture plugging may in turn reduce shroud segment cooling, which may lead to further shroud segment degradation.

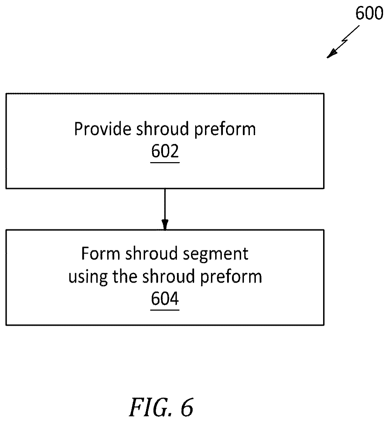

FIG. 6 is a flow diagram of a method 600 for manufacturing a shroud segment and its shroud body. For ease of description, this manufacturing method 600 is described below with respect to the shroud segments 122 of FIGS. 3-5. The manufacturing method 600 is also described below with respect to remanufacturing a respective shroud segment 122. The present disclosure, however, is not limited to manufacturing such an exemplary shroud segment nor to remanufacturing the shroud segment. A similar methodology, for example, may be used for original manufacture of the shroud segment.

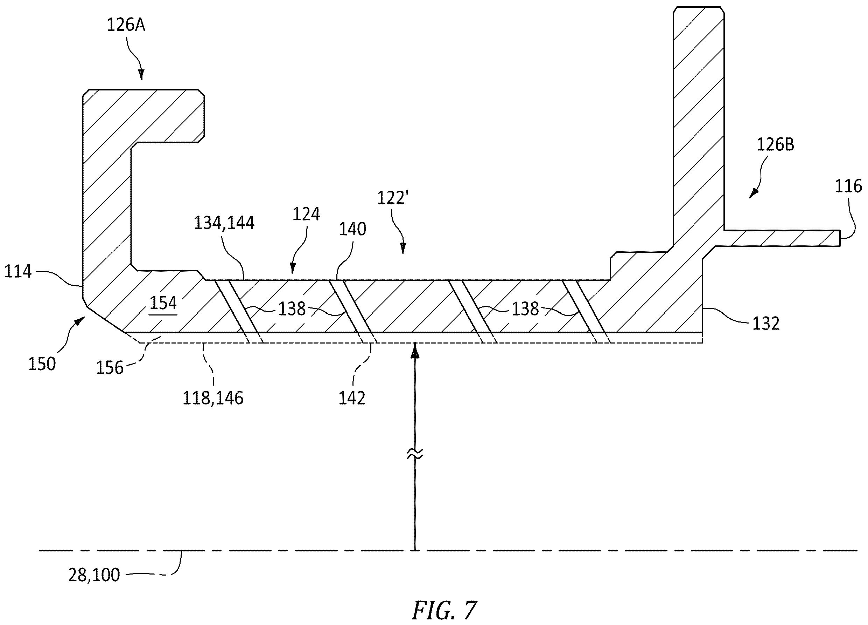

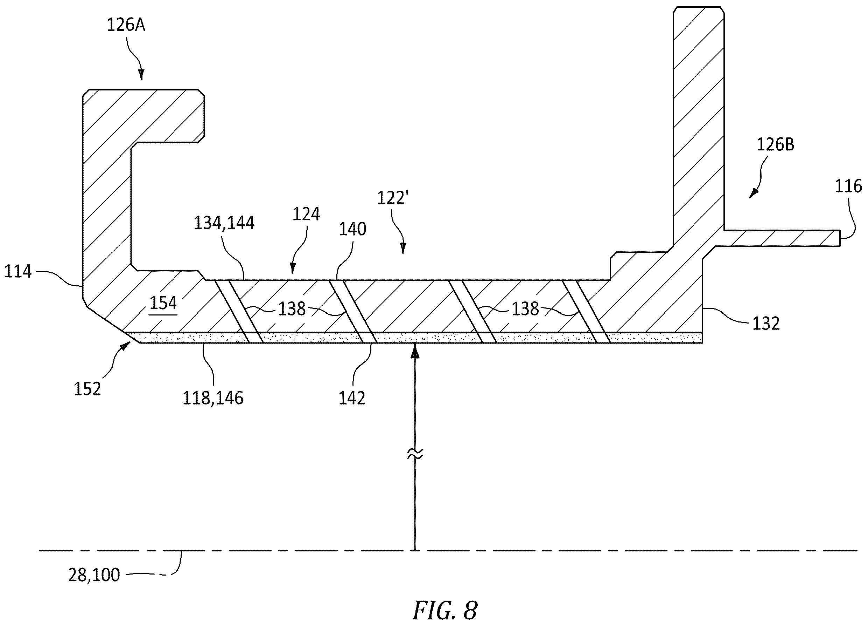

In step 602, referring to FIG. 7, a shroud preform 150 is provided. For example, referring to FIG. 8, a previously manufactured shroud segment 122' (or the entire rotor shroud) may be received. The previously manufactured shroud segment 122' of FIG. 8 and its shroud body 124 include damage at the shroud inner side 118. This damage may be produced, for example, during operation of the turbine engine 24 (see FIG. 1), where one or more of the rotor blades 98 (see FIG. 3) rub against the previously manufactured shroud segment 122' while that previously manufactured shroud segment 122' was previously installed within the turbine engine 24 during turbine engine operation as generally described above. Following disassembly of the previously manufactured shroud segment 122' (or the entire rotor shroud 92) from the turbine engine 24, a damaged portion 152 of the previously manufactured shroud segment 122' and its shroud body 124 may be partially or completely removed. The damaged portion 152 of the previously manufactured shroud segment 122' and its shroud body 124, for example, may be machined away to provide the shroud preform 150 as shown, for example, in FIG. 7.

The shroud preform 150 of FIG. 7 includes a radial outer portion 154 of the shroud body 124 as well as the attachments 126. This body outer portion 154 is disposed at the body outer side 134 and may account for a substantial portion of the shroud body 124. For example, referring to FIGS. 3 and 4, the body outer portion 154 may account for at least sixty percent (60%), seventy percent (70%), eighty percent (80%) or more of the shroud body 124 (prior to removal of the damaged portion 152 of FIG. 8 and/or prior to the previously manufactured shroud segment 122' being damaged). By contrast, the shroud preform 150 of FIG. 7 is configured without (e.g., omits) a radial inner portion 156 of the shroud body 124; e.g., the damaged portion 152 of FIG. 8. Referring to FIGS. 3 and 4, the body inner portion 156 is disposed at the shroud inner side 118 and may account for a remainder of the shroud body 124 not included in the body outer portion 154. This body inner portion 156 of FIGS. 3 and 4 (see also FIG. 5) may form the body inner surface 146 with the aperture outlets 142.

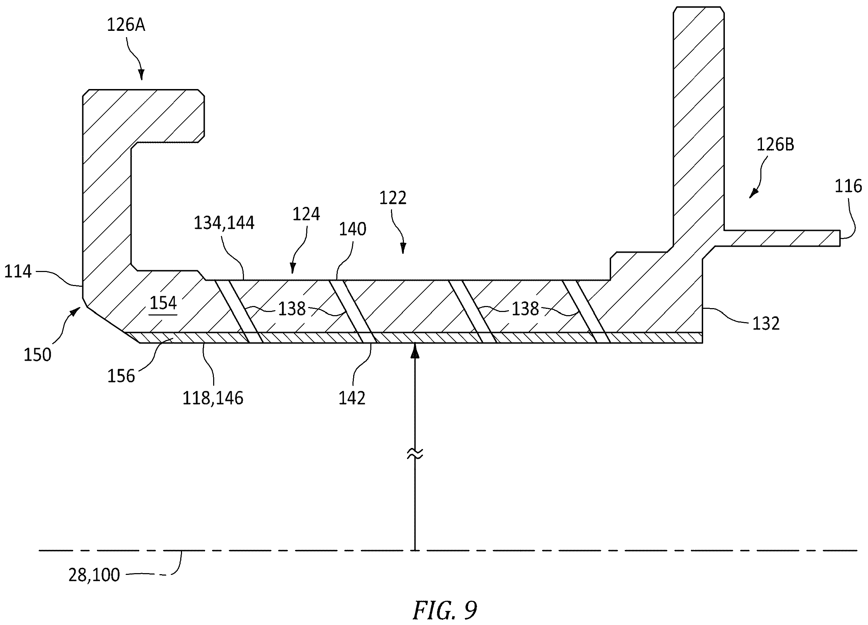

In step 604, referring to FIG. 9, a remanufactured shroud segment 122 is formed using the shroud preform 150. More particularly, material may be built up onto the shroud preform 150 to form the body inner portion 156 which was omitted from the shroud preform 150. Inclusion of the buildup material and the formed body inner portion 156 may restore one or more features of the previously manufactured shroud segment 122' (see FIG. 8) that were removed during the machining away of the damaged portion 152. This material may be built up onto the shroud preform 150 layer-by-layer using an additive manufacturing process such as, but not limited to, a directed laser metal deposition (DLMD) process.

The restored feature(s) (e.g., the body inner surface 146, the aperture outlets 142, etc. of FIGS. 3-5) may be formed according to an original design specification for the previously manufactured shroud segment 122'. The restored feature(s) (e.g., the body inner surface 146, the aperture outlets 142, etc. of FIGS. 3-5) may thereby have a common (e.g., the same) configuration (e.g., geometry, dimensions, etc.) as corresponding features had (or should have had) following an original manufacture of the previously manufactured shroud segment 122'. The present disclosure, however, is not limited to identically restoring the feature(s) of the previously manufactured shroud segment 122'. For example, one or more features may alternatively be formed (e.g., generally restored with one or more updates) during the step 604 according to a revised (e.g., updated) design specification, where the revised design specification is different than the original design specification for the previously manufactured shroud segment 122'. The difference(s) between the revised design specification and the original design specification may be characterized by one or more parameters. These parameters may include, but are not limited to: (a) material selection; (b) feature material density and/or porosity; (c) feature geometry (e.g., shape); and/or (d) feature dimension(s). For example, according to the original design specification the body inner portion 156 may be formed by a first material (e.g., a metal such as a nickel based superalloy), whereas the revised design specification may call for the body inner portion 156 to be formed by a second material (e.g., another metal such as another nickel based superalloy) different than the first material. In another example, according to the original design specification the body inner portion 156 may be formed with a uniform first density, whereas the revised design specification may call for the body inner portion 156 to be formed with a uniform second density different than the first density or alternatively a varied density.

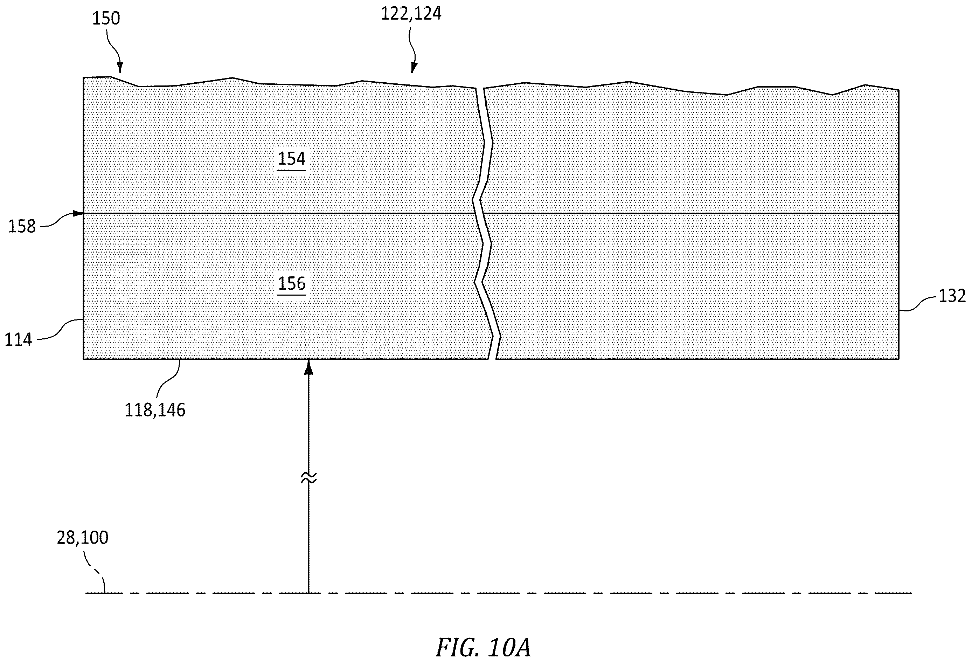

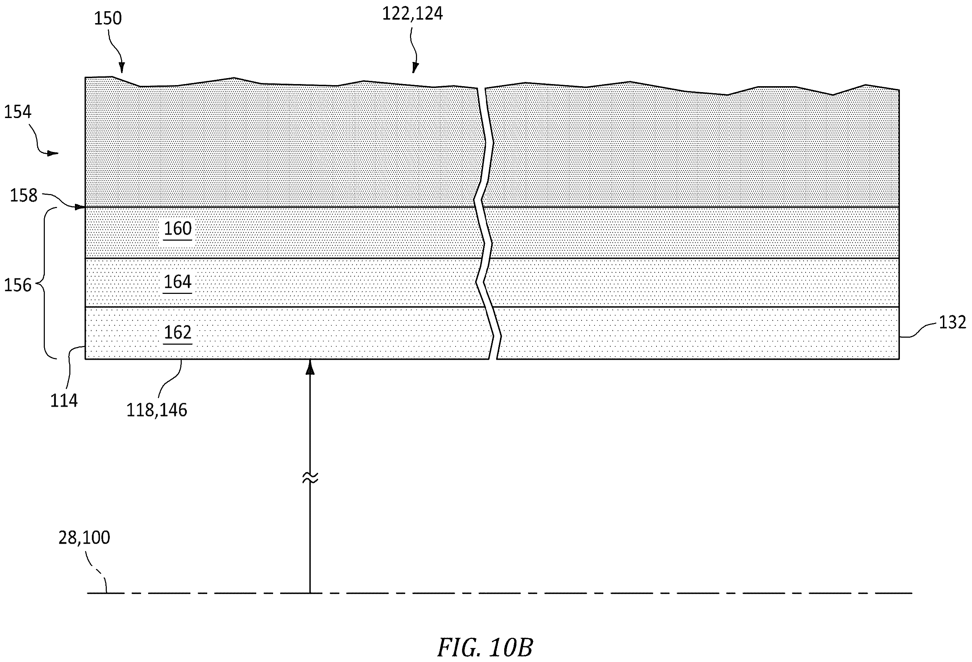

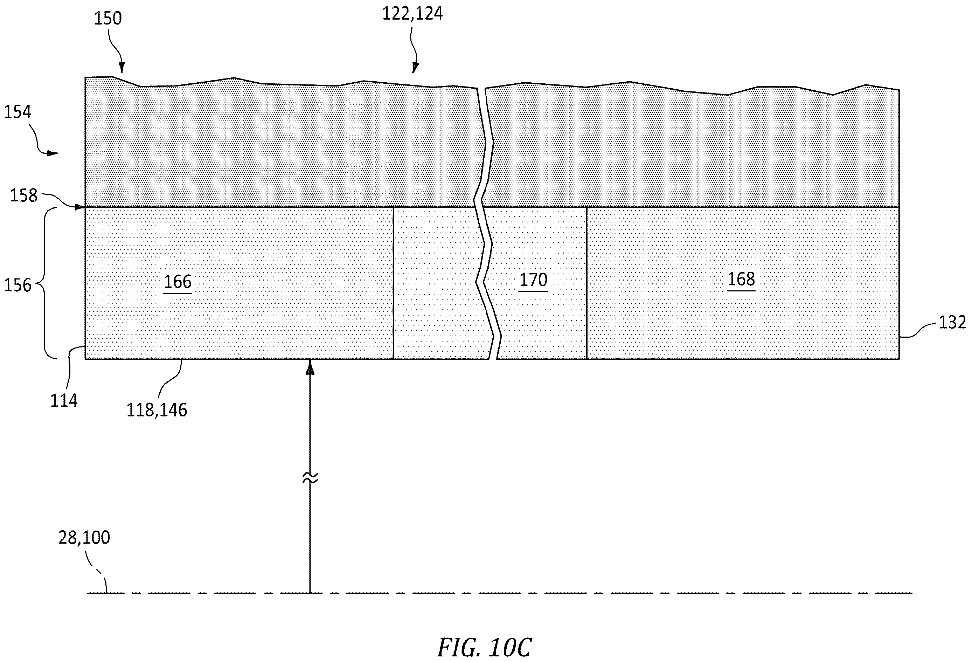

In some embodiments, referring to FIG. 10A, at least a portion or the entirety of the body outer portion 154 may be configured with a density and/or a porosity that is uniform (e.g., constant) as the shroud body 124 and its body outer portion 154 extend (a) axially along the rotor axis 100 between the shroud upstream end 114 and the body downstream end 132 and (b) radially from an intersection 158 between the body outer portion 154 and the body inner portion 156 to the body outer side 134 and the body outer surface 144 (see FIG. 3). Similarly, at least a portion or the entirety of the body inner portion 156 may be configured with a density and/or a porosity that is uniform (e.g., constant) as the shroud body 124 and its body inner portion 156 extend (a) axially along the rotor axis 100 between the shroud upstream end 114 and the body downstream end 132 and (b) radially from the intersection 158 to the shroud inner side 118 and the body inner surface 146. Here, the density and/or the porosity of the body inner portion 156 of FIG. 10A are respectively equal to the density and/or the porosity of the body outer portion 154. However, it is contemplated the density of the body inner portion 156 may be different (e.g., less) than the density of the body outer portion 154. It is also or alternatively contemplated the porosity of the body inner portion 156 may be different (e.g., greater) than the porosity of the body outer portion 154. In other embodiments, referring to FIGS. 10B and 10C, at least a portion or the entirety of the body inner portion 156 may be configured with a density and/or a porosity that varies axially and/or radially. This variation in the density and/or the porosity may be continuous or incremental. The density and/or the porosity may be varied by changing one or more parameters for the additive manufacturing process. These parameters may include, but are not limited to: laser power; scanning velocity; powder flow rate; gas flow rate; hatch spacing; and/or speed.

Referring to FIG. 10B, the density of the body inner portion 156 may change (e.g., decrease) and/or the porosity of the body inner portion 156 may change (e.g., increase) as the body inner portion 156 projects radially inward (e.g., towards the rotor axis 100) out from the body outer portion 154 to the shroud inner side 118 and the body inner surface 146. More particularly, the body inner portion 156 of FIG. 10B includes an outer density region 160, an inner density region 162 and an intermediate density region 164 radially between and adjacent the inner density region 162 and the outer density region 160. The outer density region 160 of FIG. 10B extends radially from the body outer portion 154 to the intermediate density region 164, and may have a radially uniform outer region density (e.g., about 90-95% of a density of the body outer portion 154). The intermediate density region 164 of FIG. 10B may have a radially uniform intermediate region density (e.g., about 80-85% of the density of the body outer portion 154) that is less than the outer region density. The inner density region 162 of FIG. 10B extends radially from the intermediate density region 164 to the shroud inner side 118 and the body inner surface 146, and may have a radially uniform inner region density (e.g., about 70-75% of the density of the body outer portion 154) that is less than the intermediate region density. With such an arrangement, the inner density region 162 may be configured as at least partially abradable to avoid, for example, chipping, cracking and/or material deformation upon rubbing.

Referring to FIG. 10C, density of the body inner portion 156 may also or alternatively change (e.g., decrease) and/or the porosity of the body inner portion 156 may change (e.g., increase) as the body inner portion 156 extends axially to the shroud upstream end 114 and/or the body downstream end 132. More particularly, the body inner portion 156 of FIG. 10C includes an upstream density region 166, a downstream density region 168 and an intermediate density region 170 axially between and adjacent the upstream density region 166 and the downstream density region 168. The upstream density region 166 of FIG. 10C is disposed at and at least partially or completely forms the shroud upstream end 114 radially and circumferentially along the respective body inner portion 156. This upstream density region 166 may have an axially uniform upstream region density. The downstream density region 168 of FIG. 10C is disposed at and at least partially or completely forms the body downstream end 132 radially and circumferentially along the respective body inner portion 156. This downstream density region 168 may have an axially uniform downstream region density, which may be equal to or different than the upstream region density. The intermediate density region 170 of FIG. 10C may have an axially uniform intermediate region density, which may be less than the upstream region density and/or the downstream region density. With such an arrangement, the intermediate density region 170 may be configured as at least partially abradable to avoid, for example, chipping, cracking and/or material deformation upon rubbing.

In some embodiments, referring to FIG. 9, (a) the shroud preform 150 and its body outer portion 154 and (b) the body inner portion 156 built thereon may be formed from a common material; e.g., a metal such as a nickel super alloy. In other embodiments, (a) the shroud preform 150 and its body outer portion 154 and (b) the body inner portion 156 built thereon may be formed from different materials; e.g., different metals such as metallurgically compatible nickel alloys.

In some embodiments, (a) the shroud preform 150 and its body outer portion 154 and (b) the body inner portion 156 may be formed using different formation processes. The shroud preform 150 and its body outer portion 154, for example, may be formed from cast material; e.g., cast metal such as a single crystal nickel super alloy. The body inner portion 156, by contrast, may be formed from additive manufacturing as described above. The shroud segments 122 and their shroud bodies 124 of the present disclosure, however, are not limited to such exemplary formation techniques.

In some embodiments, the cooling apertures 138 (see FIGS. 3-5) may be formed (e.g., via negative space) in the shroud body 124 and its body inner portion 156 during the additive manufacturing process. In other embodiments, the cooling apertures 138 (see FIGS. 3-5) may be machined (e.g., drilled) in the shroud body 124 and its body inner portion 156 subsequent to the additive manufacturing process.

Each shroud segment 122 and its shroud body 124 is generally described above as a bare metal body. However, it is contemplated the body inner surface 146 may be coated with one or more coatings. Examples of these coatings include, but are not limited to, an environmental coating, an erosion coating, a thermal barrier coating and/or the like.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method of manufacture, comprising:
receiving a shroud segment for a rotor shroud, the rotor shroud configured to form an air seal radially outboard of and circumscribing a bladed rotor within a turbine engine, and the shroud segment comprising a metal shroud body with a damaged portion at a radial inner periphery of the metal shroud body;
removing the damaged portion from the metal shroud body to form a shroud preform; and
depositing buildup metal onto the shroud preform using an additive manufacturing process to provide the shroud segment with a remanufactured metal shroud body.

2. The method of claim 1, wherein the additive manufacturing process is a directed laser metal deposition process; and/or
wherein the buildup metal is deposited onto the shroud preform layer-by-layer using the additive manufacturing process; and/or
wherein the damaged portion is removed from the metal shroud body by machining the metal shroud body.

3. The method of claim 1 or 2, wherein the buildup metal is deposited onto the shroud preform using the additive manufacturing process to replace a feature of the shroud segment that was at least partially defined by the damaged portion removed from the metal shroud body.

4. The method of claim 3, wherein the feature of the shroud segment is built up onto the shroud preform using the additive manufacturing process either:
according to an original design specification for the shroud segment; or according to a revised design specification that is different than an original design specification for the shroud segment.

5. The method of any preceding claim, wherein
the metal shroud body is formed from body metal; and
the body metal and the buildup metal are a common metal.

6. The method of any of claims 1 to 4, wherein
the metal shroud body is formed from body metal; and
the body metal and the buildup metal are different metals.

7. The method of any preceding claim, wherein
the damaged portion has a first density; and
a feature of the remanufactured metal shroud body formed by the buildup metal has a second density that is equal to the first density.

8. The method of any of claims 1 to 6, wherein
the damaged portion has a first density; and
at least a portion of a feature of the remanufactured metal shroud body formed by the buildup metal has a second density that is different than the first density.

9. The method of any of claims 1 to 6, wherein
the damaged portion has a uniform density; and
at least a portion of a feature of the remanufactured metal shroud body formed by the buildup metal has a non-uniform density.

10. The method of any of claims 1 to 6 or 9, wherein
the rotor shroud extends axially along and circumferentially around an axis; and
at least a portion of a feature of the remanufactured metal shroud body formed by the buildup metal has a density that axially or radially varies.

11. The method of any of claims 1 to 6, 9 or 10, wherein
a first region of the buildup metal deposited on the shroud preform has a first density;
a second region of the buildup metal deposited on the shroud preform has a second density; and
a third region of the buildup metal deposited on the shroud preform has a third density that is different than the first density and the second density, and the third region is between and adjacent the first region and the second region.

12. The method of any preceding claim, wherein the buildup metal is built up onto the shroud preform using the additive manufacturing process such that one or more cooling apertures project out of the shroud preform and extend through the buildup metal.

13. A method of manufacture, comprising:
providing a shroud preform formed from cast metal; and
building up buildup metal onto the shroud preform using an additive manufacturing process to form a shroud segment for a rotor shroud, the rotor shroud configured to form an air seal radially outboard of and circumscribing a bladed rotor within a turbine engine, and the buildup metal located at a radial inner periphery of the shroud segment;
wherein the buildup metal and the cast metal comprises a common metal.

14. The method of claim 13, wherein
the providing of the shroud preform comprises removing a damaged portion from a premanufactured shroud segment; and/or
the shroud preform has a uniform density, and at least a portion of a feature of the shroud segment formed by the buildup metal has a non-uniform density.

15. An apparatus for a turbine engine, comprising:
a rotor shroud configured to form an air seal radially outboard of and circumscribing a bladed rotor within the turbine engine, the rotor shroud comprising a shroud segment;
the shroud segment extending axially along an axis between opposing axial ends of the shroud segment, the shroud segment extending circumferentially about the axis between opposing circumferential ends of the shroud segment, the shroud segment extending radially between an inner side of the shroud segment and an outer side of the shroud segment, and the shroud segment comprising a metal shroud body;
an outer portion of the metal shroud body disposed at the outer side of the shroud segment, the outer portion of the metal shroud body comprising a first density; and
an inner portion of the metal shroud body disposed at the inner side of the shroud segment, the inner portion of the metal shroud body comprising a second density that is less than the first density;
wherein the outer portion of the metal shroud body and the inner portion of the metal shroud body comprises a common metal.
